# EUROPÄISCHE PATENTSCHRIFT

(11) **EP 2 257 747 B1**
(45) Veröffentlichungstag und Bekanntmachung des Hinweises auf die Patenterteilung: **23.10.2013**
(21) Anmeldenummer: 09713819.2
(22) Anmeldetag: 23.02.2009
(51) Int. Cl.: F24J 3/08

(54) **SONDENFUSS**
PROBE BASE
PIED DE SONDE

(30) Priorität: 26.02.2008 DE 202008002687 U
(43) Veröffentlichungstag der Anmeldung: 08.12.2010
(73) Patentinhaber: Rehau AG + Co, 95111 Rehau (DE)
(72) Erfinder: GOTTSCHALK, Daniel, 90431 Nürnberg (DE); PSYK, Mario, 90431 Nürnberg (DE)
(86) Internationale Anmeldenummer: PCT/EP2009/001266
(87) Internationale Veröffentlichungsnummer: WO 2009/106277

(56) Entgegenhaltungen:
- DE-A1- 3 033 255
- DE-A1- 3 704 935
- DE-U1- 20 306 216
- US-S1- D 488 486

## Beschreibung

Die vorliegende Erfindung betrifft einen Sondenfuß für eine Vorrichtung zur Erdwärmegewinnung oder Erdwärmespeicherung, der mit Rohren verbindbar ist und aus einem Fluidleitabschnitt und einem diesem gegenüberliegenden Fußabschnitt besteht, wobei Rippen am Fluidleitabschnitt und am Fußabschnitt angeordnet sind.

Weiterhin betrifft die Erfindung eine Vorrichtung zur Erdwärmegewinnung oder Erdwärmespeicherung, die mit einem Sondenfuß ausgestattet ist.

Schließlich betrifft die Erfindung auch noch ein Heiz- bzw. Kühlsystem mit einer Vorrichtung zur Erdwärmegewinnung oder Erdwärmespeicherung.

### Stand der Technik

Aus dem Stand der Technik sind Sondenfüße bekannt, die bei der Erdwärmegewinnung oder Erdwärmespeicherung verwendet werden und aus einem Fluidleitabschnitt und einem diesem gegenüberliegenden Fußabschnitt bestehen, wobei Rippen am Fluidleitabschnitt und am Fußabschnitt angeordnet sind.

So zeigt die US D488486 S einen Sondenfuß mit Rippen.

Nachteilig ist bei dieser Lösung, dass die Anordnung der Rippen weder dem Bauteil eine hohe Stabilität verleihen, noch für einen einfachen Einbau des Sondenfußes in ein Bohrloch geeignet sind.

Aus der DE 37 04 935 A1 sind Einrichtungen zur Nutzung der in einem Thermalbrunnen enthaltenen Erdwärme bekannt.

### Aufgabenstellung

Der Erfindung liegt die Aufgabe zugrunde, einen Sondenfuß bereitzustellen, der mit wenig Materialaufwand in einfacher Herstellungstechnik zugänglich ist, eine hohe Stabilität besitzt, eine große mechanische Widerstandsfähigkeit sowie eine vorteilhafte Oberflächengestaltung für den Einbauprozess aufweist und dazu fluidströmungstechnisch möglichst ideal ausgelegt ist.

### Lösung der Aufgabe

Die Lösung der Aufgabe gelingt durch die Angabe eines Sondenfußes mit den Merkmalen gemäß Anspruch 1.

Vorteilhafte Ausführungsformen der Erfindung sind in den Unteransprüchen niedergelegt.

Der Sondenfuß für eine Vorrichtung zur Erdwärmegewinnung oder Erdwärmespeicherung gemäß vorliegender Erfindung ist mit Rohren verbindbar und besteht aus einem Fluidleitabschnitt und einem diesem gegenüberliegenden Fußabschnitt, wobei Rippen am Fluidleitabschnitt und am Fußabschnitt angeordnet sind. Die Rippen verlaufen im Wesentlichen zwischen Fluidleitabschnitt und Fußabschnitt in Achsrichtung der verbundenen Rohre.

Erfindungsgemäß sind die Rippen im Wesentlichen parallel zueinander angeordnet. Auf diese Weise kann der Sondenfuß mit den verbundenen Rohren in leichter Weise gleitend in das Bohrloch eingeführt werden.

In einer vorteilhaften Ausgestaltung der Erfindung sind die Rippen im Wesentlichen gleich beabstandet. Dies hat Vorteile bei der Herstellung des Formteils, da so eine hohe Stabilität gegen mechanische Belastung erreicht wird.

Der Sondenfuß lässt sich in einem Formgebungsprozess besonders günstig herstellen, wenn die Rippen im Wesentlichen von gleicher Wanddicke sind. Weiterhin ist vorteilhaft, wenn die Dicke der Rippen annähernd so groß ist wie deren lichter Abstand voneinander. Es kann auch vorteilhaft vorgesehen sein, dass die Dicke der Rippen annähernd einem Drittel deren lichten Abstandes voneinander beträgt. Alle Zwischenwerte sind ebenso möglich.

Dadurch treten kaum Spannungen im Bauteil auf, die später zu einem Bauteilversagen führen könnten.

Es hat sich erfindungsgemäß weiterhin als besonders vorteilhaft herausgestellt, wenn die Rippen eine verrundeter Außenkante aufweisen. Mit dieser Maßnahme gelingt es, den Widerstand beim Einbau der Sonde in ein Bohrloch weiter zu senken. Weiterhin ist die Beschädigungsgefahr des Sondenkopfes beim Einbau erheblich reduziert.

In einer Weiterentwicklung des Sondenfußes kann vorteilhaft vorgesehen sein, dass zwischen den Rippen Verbindungsrippen angeordnet sind, die im Wesentlichen senkrecht zu den Rippen verlaufen. Hierdurch wird der Sondenfuß noch weiter stabilisiert.

Der Sondenfuß gemäß dieser Erfindung kann einstückig ausgebildet sein. Er ist dann besonders stabil und in einfacher Weise herstellbar.

In einer alternativen Ausführung kann der Sondenfuß mehrstückig ausgebildet sein. Dies hat Vorteile, weil damit eine besonders gute Anpassung des jeweiligen Abschnitts an die jeweils vorgesehene Funktion vorgesehen werden kann.

Einen Sondenfuß gemäß vorliegender Erfindung, der besonders vorteilhaft die Fluidströmung leitet, ist dadurch realisierbar, dass der Fluidleitabschnitt als Rohrbogen ausgebildet ist.

In diesem Zusammenhang kann vorgesehen sein, dass der Rohrbogen einen konstanten Krümmungsradius aufweist.

Dadurch wird dem strömenden Fluid nur ein sehr geringer Widerstand entgegengesetzt.

In einer weiteren bevorzugten Ausführungsform weist der Rohrbogen im Wesentlichen einen konstanten Innendurchmesser auf.

Dies hat Vorteile für einen möglichst ungehinderten Fluidstrom durch den Rohrbogen.

Bevorzugt ist der Rohrbogen derart gestaltet, dass er die Fluidströmung um ca. 180° umlenkt.

Hierdurch werden Erdwärmesonden herstellbar, die eine besonders kompakte Bauform bei geringem Druckverlust aufweisen.

Besonders bevorzugt ist eine Ausführungsform, bei der der Rohrbogen im Wesentlichen eine gleiche Wandstärke an den Stellen, wo keine Rippen ansetzen, aufweist.

Dadurch resultiert sowohl eine besonders günstiges Herstellverfahren, bei dem der Spannungsaufbau im Rohrbogen und in den ansetzenden Rippen weitgehend reduziert ist, als auch ein sehr widerstandsfähiges Bauteil, das insbesondere unter mechanischer Belastung, die beispielsweise von Druckschwankungen des Fluids im Rohrbogen herrühren, eine hohe Stabilität und damit Dauergebrauchsfestigkeit aufweist.

In einer weiteren Ausführung des Sondenfußes gemäß vorstehender Erfindung kann auch vorgesehen sein, dass die gewählte Gestaltung es zulässt, zwei Sondenfüße paarig zu verbinden.

In diesem Zusammenhang kann vorgesehen sein, die Sondenfüße so zu gestalten, dass diese paarig seitlich nebeneinander oder kreuzweise übereinander angeordnet und verbunden werden können.

Dies kann mittels eines Verbindungselements realisiert sein.

Die paarige Anordnung zweier Sondenfüße kann vorteilhaft für die Herstellung einer Doppelsonde verwendet werden, die durch diese Maßnahme von höherer Stabilität und beim Einbau leichter zu handhaben ist.

Vorteilhaft ist weiterhin vorgesehen, am Sondenfuß eine derart Gestaltung zu realisieren, dass ein Mittel zur Kraftübertragung anbringbar ist.

Diese Gestaltung zur Anbringung eines Mittels zur Kraftübertragung kann beispielsweise ein angeformter Flansch, ein Durchbruch, ein Vorsprung, oder auch ein zusätzlich angebrachtes Metallteil sein.

Die Kraftübertragung auf den Sondenfuß wird dann eingesetzt, wenn die Erdwärmesonde in das Bohrloch eingebracht werden soll. Hierzu wird mit Hilfe eines Gestänges oder eines angebrachten Gewichtes die Einbringung der Sonde in das Loch vorteilhaft erleichtert.

Der Sondenfuß kann so gestaltet sein, dass am Fluidleitabschnitt Mittel angeordnet sind, um die Rohre anzuschweißen und / oder anzukleben und / oder anzuschrauben und / oder anzustecken.

Es ist damit leicht möglich, die notwendige Verbindung zwischen den Rohren und dem Sondenfuß herzustellen.

Es hat sich herausgestellt, dass es besonders günstig ist, wenn der Sondenfuß aus Polymermaterial hergestellt ist.

Als Polymermaterial kann in diesem Zusammenhang vorgesehen sein ein Polyethylen (PE), eine vernetztes Polyethylen (PE-X), eine Polypropylen (PP) oder ein Polybutylen (PB).

Diese Werkstoffe sind genügend widerstandfähig gegen die thermischen und mechanischen Belastungen, denen ein Sondenfuß bei der Herstellung, bei der Lagerung, beim Einbau und beim Betrieb unterliegt.

Die Erfindung findet beispielsweise Anwendung bei einer Vorrichtung zur Erdwärmegewinnung oder Erdwärmespeicherung. Diese ist entsprechend mit einem Sondenfuß gemäß der vorliegenden Erfindung ausgestattet.

Besonders vorteilhaft wird die Erfindung bei einem Heiz- bzw. Kühlsystem mit einer Vorrichtung zur Erdwärmegewinnung und/oder Erdwärmespeicherung eingesetzt.

Die Erfindung wird im Folgenden anhand von Ausführungsbeispielen näher beschrieben, hierzu wird auf die die Erfindung illustrierenden Figuren Bezug genommen.

Zu den Figuren:
- Fig. 1: zeigt einen Sondenfuß in Aufsicht;
- Fig. 2: zeigt einen Sondenfuß in einer Schnittdarstellung;
- Fig. 3: zeigt paarig verbundene Sondenfüße in einer perspektivischen Darstellung mit den verbundenen Rohren;
- Fig. 4: zeigt einen Sondenfuß in Aufsicht.

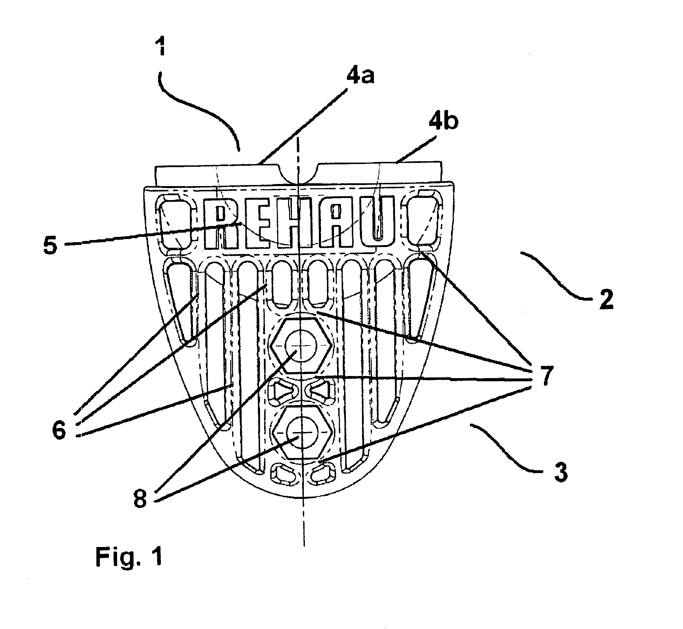

Ein Sondenfuß (1) gemäß der vorliegenden Erfindung ist in Fig. 1 in Aufsicht gezeigt. Der Sondenfuß (1) weist einen Fluidleitabschnitt (2) und einen Fußabschnitt (3) auf. Am Fluidleitabschnitt (2) sind Rohrbogenenden (4a, 4 b) ausgebildet, die zur Verbindung des Sondenfußes (1) mit hier nicht gezeigten Rohren dienen.

Bestandteil des Fluidleitabschnittes (2) ist ein Rohrbogen (5), der in der Fig. 1 angedeutet dargestellt ist.

Rippen (6) sind am Sondenfuß (1) derart angeordnet, dass sie im Wesentlichen zwischen Fluidleitabschnitt (2) und Fußabschnitt (3) in Achsrichtung der hier nicht gezeigten Rohre verlaufen.

Weiterhin sind zwischen den Rippen (6) Verbindungsrippen (7) angeordnet, die im Wesentlichen senkrecht zu den Rippen (6) verlaufen.

Zwei solche Sondenfüße (1) sind mittels eines Verbindungselements über den Durchbruch (8) paarig verbindbar.

An den Durchbrüchen (8) kann auch ein Mittel zur Kraftübertragung angebracht werden.

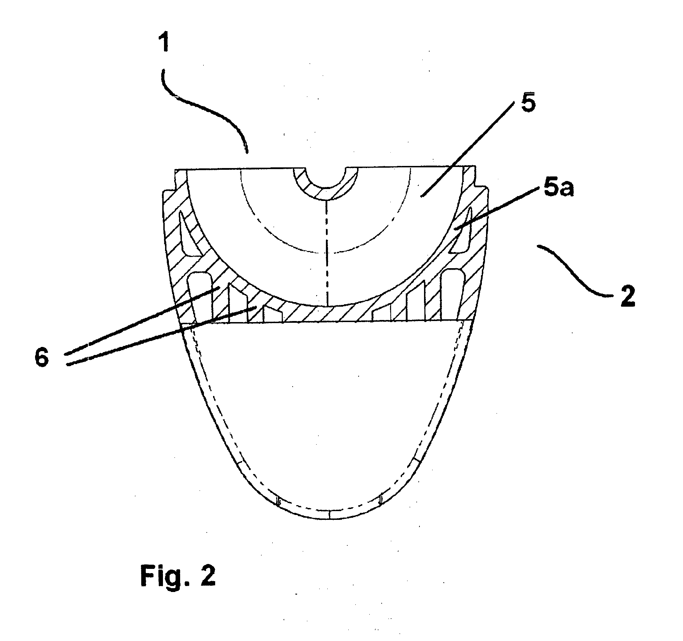

Gemäß Fig. 2 ist in der Schnittdarstellung gezeigt, dass im Fluidleitabschnitt (2) des Sondenfußes (1) ein Rohrbogen (5) geformt ist, der einen konstanten Krümmungsradius aufweist, der im Wesentlichen einen konstanten Innendurchmesser besitzt und dessen Wandung (5a) an den Stellen, wo keine Rippen (6) ansetzen, im Wesentlichen gleich ist.

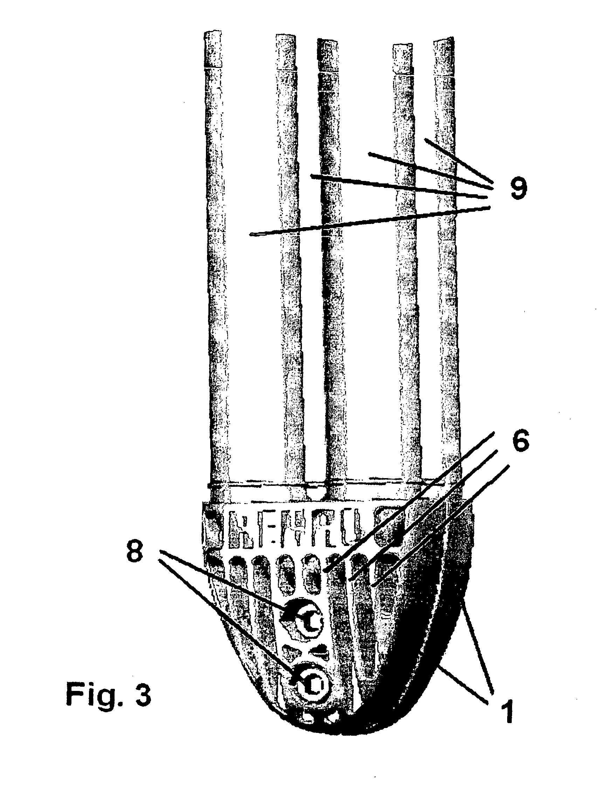

Weiterhin sind in Fig. 3 zwei verbundene Sondenfüße (1) in perspektivischer Ansicht gezeigt, die mit den Rohren (9) verbunden sind.

Zwei Sondenfüße (1) sind dazu mittels eines Verbindungselements in Form einer Schraube über die Durchbrüche (8) paarig angeordnet.

Die Rippen (6) sind am Sondenfuß (1) derart angeordnet, dass sie im Wesentlichen in Achsrichtung der hier gezeigten Rohre (9) verlaufen.

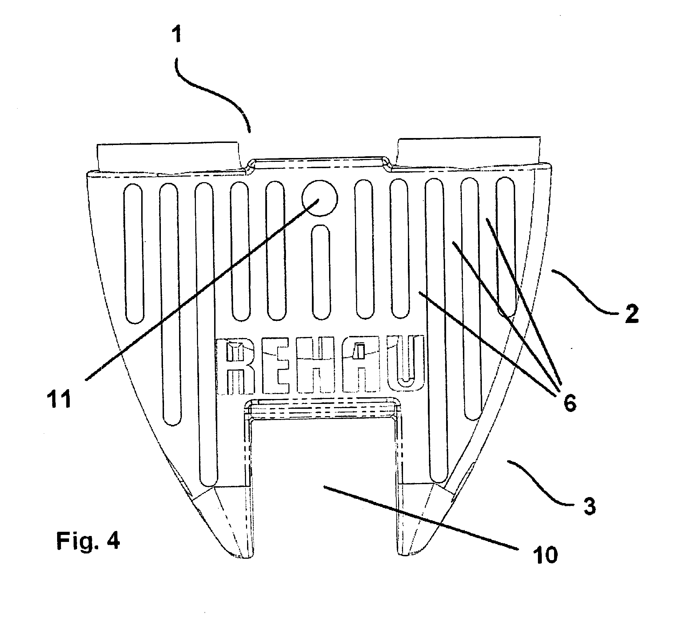

Schließlich ist in Fig. 4 ein Sondenfuß (1) in Aufsicht gezeigt, der mit Rohren verbindbar ist. Der Sondenfuß (1) weist am Fußabschnitt (3) eine Aussparung (10) auf, die so bemessen ist, dass sie ein kreuzweises Verbinden mit einem zweiten Sondenfuß (1) an dessen Fluidleitabschnitt (2) ermöglicht. Weiterhin ist am Sondenfuß (1) ein Mittel (11) angeordnet, das eine Verbindung der beiden kreuzweise angeordneten Sondenfüße ermöglicht.

Die Rippen (6) sind am Sondenfuß (1) derart angeordnet, dass sie im Wesentlichen in Achsrichtung der hier nicht gezeigten Rohre verlaufen.

## Patentansprüche

1. Sondenfuß (1) für eine Vorrichtung zur Erdwärmegewinnung oder Erdwärmespeicherung, der mit Rohren (9) verbindbar ist und aus einem Fluidleitabschnitt (2) und einem diesem gegenüberliegenden Fußabschnitt (3) besteht, wobei Rippen (6) am Fluidleitabschnitt (2) und am Fußabschnitt (3) angeordnet sind, die im Wesentlichen zwischen Fluidleitabschnitt (2) und Fußabschnitt (3) in Achsrichtung der verbundenen Rohre (9) verlaufen, **dadurch gekennzeichnet, dass** die Rippen (6) im Wesentlichen parallel zueinander angeordnet sind.

2. Sondenfuß (1) nach einem der vorangehenden Ansprüche, **dadurch gekennzeichnet, dass** die Rippen (6) im Wesentlichen gleich beabstandet sind.

3. Sondenfuß (1) nach einem der vorangehenden Ansprüche, **dadurch gekennzeichnet, dass** die Rippen (6) im Wesentlichen von gleicher Wanddicke sind.

4. Sondenfuß (1) nach einem der vorangehenden Ansprüche, **dadurch gekennzeichnet, dass** die Dicke der Rippen annähernd so groß ist wie deren lichter Abstand voneinander.

5. Sondenfuß (1) nach Anspruch 4, **dadurch gekennzeichnet, dass** die Dicke der Rippen annähernd einem Drittel deren lichten Abstandes voneinander beträgt.

6. Sondenfuß (1) nach einem der vorangehenden Ansprüche, **dadurch gekennzeichnet, dass** die Rippen (6) eine verrundeter Außenkante aufweisen.

7. Sondenfuß (1) nach einem der vorangehenden Ansprüche, **dadurch gekennzeichnet, dass** zwischen den Rippen (6) Verbindungsrippen (7) angeordnet sind, die im Wesentlichen senkrecht zu den Rippen (6) verlaufen.

8. Sondenfuß (1) nach einem der vorangehenden Ansprüche, **dadurch gekennzeichnet, dass** dieser einstückig ausgebildet ist.

9. Sondenfuß (1) nach einem der Ansprüche 1 bis 7, **dadurch gekennzeichnet, dass** dieser mehrstückig ausgebildet ist.

## Claims

1. Probe foot (1) for a device for geothermal energy extraction or geothermal energy storage, which foot can be connected to pipes (9) and comprises a fluid guide section (2) and a foot section (3) opposite the latter, wherein ribs (6) are arranged on the fluid guide section (2) and on the foot section (3) and extend substantially between the fluid guide section (2) and the foot section (3) in the axial direction of the connected pipes (9), **characterized in that** the ribs (6) are arranged substantially parallel to one another.

2. Probe foot (1) according to Claim 1, **characterized in that** the ribs (6) are substantially identically spaced apart.

3. Probe foot (1) according to either of the preceding claims, **characterized in that** the ribs (6) have substantially the same wall thickness.

4. Probe foot (1) according to one of the preceding claims, **characterized in that** the thickness of the ribs is approximately of the same size as their clear spacing from one another.

5. Probe foot (1) according to Claim 4, **characterized in that** the thickness of the ribs is approximately a third of their clear spacing from one another.

6. Probe foot (1) according to one of the preceding claims, **characterized in that** the ribs (6) have a rounded outer edge.

7. Probe foot (1) according to one of the preceding claims, **characterized in that** connecting ribs (7) are arranged between the ribs (6) and extend substantially perpendicularly to the ribs (6).

8. Probe foot (1) according to one of the preceding claims, **characterized in that** it is of one-piece design.

9. Probe foot (1) according to one of Claims 1 to 7, **characterized in that** it is of multipiece design.

## Revendications

1. Pied de sonde (1) pour un dispositif de récupération de chaleur géothermique ou d'accumulation de chaleur géothermique, qui peut être relié par des tuyaux (9) et qui se compose d'une portion de guidage de fluide (2) et d'une portion de pied (3) opposée à celle-ci, des nervures (6) étant disposées au niveau de la portion de guidage de fluide (2) et de la portion de pied (3), lesquelles s'étendent essentiellement entre la portion de guidage de fluide (2) et la portion de pied (3) dans la direction axiale des tuyaux reliés (9), **caractérisé en ce que** les nervures (6) sont disposées essentiellement parallèlement les unes aux autres.

2. Pied de sonde (1) selon la revendication 1, **caractérisé en ce que** les nervures (6) sont espacées essentiellement uniformément.

3. Pied de sonde (1) selon l'une quelconque des revendications précédentes, **caractérisé en ce que** les nervures (6) ont essentiellement la même épaisseur de paroi.

4. Pied de sonde (1) selon l'une quelconque des revendications précédentes, **caractérisé en ce que** l'épaisseur des nervures est approximativement aussi grande que leur espacement intérieur les unes par rapport aux autres.

5. Pied de sonde (1) selon la revendication 4, **caractérisé en ce que** l'épaisseur des nervures vaut approximativement un tiers de leur espacement intérieur les unes par rapport aux autres.

6. Pied de sonde (1) selon l'une quelconque des revendications précédentes, **caractérisé en ce que** les nervures (6) présentent une arête extérieure arrondie.

7. Pied de sonde (1) selon l'une quelconque des revendications précédentes, **caractérisé en ce que** des nervures de connexion (7) sont disposées entre les nervures (6), lesquelles nervures de connexion s'étendent essentiellement perpendiculairement aux nervures (6).

8. Pied de sonde (1) selon l'une quelconque des revendications précédentes, **caractérisé en ce que** celui-ci est réalisé d'une seule pièce.

9. Pied de sonde (1) selon l'une quelconque des revendications 1 à 7, **caractérisé en ce que** celui-ci est réalisé en plusieurs parties.
